# EUROPÄISCHE PATENTSCHRIFT

(11) **EP 1 701 203 B1**
(45) Veröffentlichungstag und Bekanntmachung des Hinweises auf die Patenterteilung: **16.05.2007**
(21) Anmeldenummer: 05005249.7
(22) Anmeldetag: 10.03.2005
(51) Int. Cl.: G02F 1/13357

(54) **Flachbildschirm**
Flat panel display
Ecran plat

(43) Veröffentlichungstag der Anmeldung: 13.09.2006
(73) Patentinhaber: Nanogate Advanced Materials GmbH, 66121 Saarbrücken (DE)
(72) Erfinder: Klenke, Martin, Dr., 66440 Blieskastel (DE)
(74) Vertreter: von Kreisler Selting Werner

(56) Entgegenhaltungen:
- EP-A- 0 985 952
- US-A- 6 007 209
- PATENT ABSTRACTS OF JAPAN Bd. 2003, Nr. 12, 5. Dezember 2003 (2003-12-05) & JP 2005 049763 A (TOPPAN PRINTING CO LTD), 24. Februar 2005 (2005-02-24) & DATABASE WPI Week 200522 Derwent Publications Ltd., London, GB; AN 2005-204865
- PATENT ABSTRACTS OF JAPAN Bd. 2003, Nr. 12, 5. Dezember 2003 (2003-12-05) & JP 2003 330106 A (SEIKO EPSON CORP), 19. November 2003 (2003-11-19) & DATABASE WPI Week 200408 Derwent Publications Ltd., London, GB; AN 2004-075507

## Beschreibung

Die Erfindung betrifft einen Flachbildschirm, insbesondere einen LCD-Bildschirm mit LED-Beleuchtung.

Bekannte Bildschirme mit Flüssigkristall-Elementen weisen ein Leuchtelement, wie einen Leuchtkasten, auf, in dem mehrere Leuchtstoffröhren, insbesondere CCFLs, angeordnet sind. Zur Vergleichmäßigung der Ausleuchtung des Flüssigkristall-Elementes sind zwischen dem Leuchtelement, d. h. den Röhren, und dem Flüssigkristall-Element Lichtlenkelemente angeordnet. Hierbei handelt es sich um mit BEF, mit DBEF und PRF bezeichnete Folien. Hierzu weist die BEF-Folie eine viele kleine Prismen aufweisende Oberfläche auf. Es handelt sich hierbei um refraktive Oberflächenelemente. Die DBEF-Folie dient dazu, Licht, das von der Rückseite des Flüssigkristall-Elementes reflektiert, wird in seiner Polarisationsrichtung zu ändern und auf das Flüssigkristall-Element zurückzulenken. Die PRF-Folie dient zur Polarisation des Lichts. Das Vorsehen derartiger Folien hat den Nachteil, dass durch die Folien ein Teil des Licht absorbiert wird, so dass sich die integrale Helligkeit des Bildschirmes verringert.

Ferner sind Flachbildschirme bekannt, bei denen anstatt von Röhren, wie CCFLs, weiße LEDs verwendet werden. Um ein relativ gleichmäßiges Ausleuchten und somit eine verhältnismäßig gleichmäßige Helligkeitsverteilung über den Querschnitt des Flachbildschirmes zu erzielen, ist es jedoch erforderlich, eine Vielzahl von LEDs vorzusehen. Bei bekannten LED-Flachbildschirmen weisen die LEDs einen Abstand von ca. 1 mm auf. Bei einem Bildschirm mit einer Kantenlänge von 40 cm x 30 cm sind somit min. 500 - 1000 LEDs vorgesehen. Dies ist mit erheblichen Kosten sowie mit einem großen Montageaufwand verbunden. Ferner ist die große Anzahl an LEDs mit einer erheblichen Wärmeentwicklung verbunden.

Aus EP 0 985 952 ist ein LEDs aufweisender Flachbildschirm bekannt. Dieser weist ein Flüssigkristall-Element zur Bilddarstellung auf, wobei zur Lichterzeugung eine Vielzahl von LEDs vorgesehen sind. Zwischen den LEDs und dem Flüssigkristall-Element ist ein Lichtlenkelement angeordnet. Das Lichtlenkelement weist zur Lichtlenkung mehrere Oberflächenelemente auf, die ein Beugungsgitter aufweisen können.

Ferner ist aus JP 2005-049763 ein Lichtlenkelement mit zwei diffraktiven Gittern und einer auf jeder Seite eines transparenten Kunststoffs vorgesehenen Reflektionsschicht bekannt.

Der Erfindung liegt die Aufgabe zu Grunde, einen Flachbildschirm zu schaffen, der bei guter Lichtausbeute kostengünstig herstellbar ist.

Die Lösung der Aufgabe erfolgt erfindungsgemäß durch die Merkmale des Anspruchs 1.

Der erfindungsgemäße Flachbildschirm weist ein Flüssigkristall-Element zur Bilddarstellung, wie ein LCD-Element, auf. Hierbei können die einzelnen Flüssigkristalle über TFT angesteuert werden. Ferner weist der erfindungsgemäße Flachbildschirm eine Vielzahl von Lichtquellen, wie LEDs, auf, die ein Leuchtelement bzw. einen Leuchtkasten ausbilden. Zwischen dem Flüssigkristall-Element und dem Leuchtelement ist ein Lichtlenkelement angeordnet.

Erfindungsgemäß weist das Lichtlenkelement an einer Oberfläche diffraktive Oberflächenelemente auf. Durch Vorsehen von diffraktiven Oberflächenelementen wird das von den Lichtquellen abgegebene Licht derart gebeugt, dass eine Vergleichmäßigung der Helligkeitsverteilung und/ oder der Wellenlängenverteilung erfolgt.

Durch das Vorsehen von diffraktiven Oberflächenelementen an der Oberfläche des Lichtlenkelementes kann das von einer LED beispielsweise kegelförmig abgestrahlte Licht derart gebeugt und verteilt werden, dass eine Vergleichmäßigung der Helligkeitsverteilung über den gesamten Querschnitt des Flachbildschirmes erzielt werden kann.

Hierzu weisen die einzelnen Oberflächenelemente eine Größe von 0,04 - 10.000 µm² und einen Abstand untereinander von mehr als 0 - 100 µm² auf.

Da die Oberflächenelemente beispielsweise eine wellenförmige Oberflächenstruktur aufweisen, kann je nach Ausgestaltung der Wellenstruktur, d. h. insbesondere der Höhe und der Breite der einzelnen Wellen, die Wellenlänge des von den diffraktiven Oberflächenelementen abgegebenen Lichts definiert werden. Es ist somit ferner möglich, den Wellenlängenbereich des abgegebenen Lichts zu vergleichmäßigen. Hierbei wird durch die einzelnen Oberflächenelemente, die insbesondere unterschiedlich gestaltete Oberflächen aufweisen können, die Wellenlänge des von den Punktlichtquellen abgegebenen Lichts derart beeinflusst, dass vorzugsweise monochromatisches Licht und/ oder weißes Licht entsteht.

Besonders bevorzugt ist es, die einzelnen Oberflächenelemente derart auszubilden, dass die Amplitude der unterschiedlichen Oberflächenstrukturen konstant ist und nur die Frequenz geändert ist. Somit wird gewährleistet, dass die Beugungseffizienz auf der gesamten Oberfläche gleich ist. Je nach Art der Oberflächenstruktur, bei der es sich nicht zwingend um eine sinusförmige Oberflächenstruktur handeln muss, sind allgemeiner ausgedrückt sämtliche Erhöhungen gleich hoch, weisen jedoch unterschiedliche Abstände auf. Dies führt dazu, dass das von der Lichtquelle abgegebene Licht von den einzelnen Oberflächenelementen unterschiedlich gebeugt wird. Vorteilhaft ist hierbei insbesondere, dass eine Variation der Abstände einfacher herstellbar ist als variierende Höhen.

Durch das erfindungsgemäße Vorsehen eines Lichtlenkelementes mit einer Vielzahl an der Oberfläche vorgesehenen diffraktiven Oberflächenelementen kann die Anzahl der einzelnen Punktlichtquellen bzw. der LEDs erheblich reduziert werden. Bei gleichbleibender Helligkeitsverteilung sowie gleichbleibender effektiver Helligkeit des Flachbildschirms können mehr als 10 %, insbesondere mehr als 40 % an LEDs eingespart werden.

Das erfindungsgemäße Lichtlenkelement ist vorzugsweise aus transparentem Kunststoff, wie PMMA, PEC, PET, PE etc., und/ oder einem Mineralglas hergestellt. Die Dicke des Lichtlenkelementes ist vorzugsweise im Bereich von 0,1 mm bis 20 mm und insbesondere 0,5 mm bis 5 mm.

Mit Hilfe des erfindungsgemäßen Lichtlenkelementes ist es möglich, zwischen der Austrittsoberfläche des Lichtleitkörpers und dem Display des Bildschirms bzw. dem Flüssigkeitskristall-Element keine weiteren lichtlenkenden Komponenten, wie z. B. Folien, vorzusehen. Insbesondere die BEF-Folie kann entfallen. Abgesehen von ggf. vorgesehenen, das Lichtlenkelement rahmenartig umgebenden Reflexionselementen ist somit erfindungsgemäß eine transflektive oder transmissive Hintergrundbeleuchtung ohne weitere lichtlenkende Komponenten geschaffen. Auf Grund des Vorsehens diffraktiver Oberflächenelemente an der Austrittsoberfläche des Lichtlenkelementes kann der Aufbau des Flachbildschirmes vereinfacht werden. Hierdurch ist die Qualität des Flachbildschirmes und insbesondere die Lebensdauer verbessert.

Vorzugsweise sind die einzelnen Oberflächenelemente derart ausgebildet, dass sie als Beugungselemente wirken, die vorzugsweise ein kollimiertes Lichtbündel mit spektraler Lichtaufspaltung erzeugen. Hierzu weisen die einzelnen Oberflächenelemente vorzugsweise im Querschnitt wellenförmige Oberflächenstrukturen auf, wobei der Wellenabstand in Abhängigkeit der auszulenkenden Wellenlänge gewählt ist. Hierbei weisen vorzugsweise einzelne Oberflächenelemente unterschiedliche Beugungsgitter auf. Besonders bevorzugt ist es, dass die Oberflächenelemente derart angeordnet sind, dass durch Überlagerung von mindestens zwei benachbarten Lichtbündeln überwiegend monochromatisches Licht und/ oder weißes Licht entsteht. Hierbei wird unter monochromatischem Licht ein Wellenlängenbereich von ± 100 nm, insbesondere ± 50 nm verstanden. Durch das erfindungsgemäße Vorsehen derartiger Oberflächenelemente kann somit ein weitgehend monochromatisches, insbesondere kollimiertes Licht mit hoher Lichtstromdichte erzeugt werden.

Durch die Ausgestaltung der Oberfläche der Oberflächenelemente ist es ferner möglich, die Abstrahlrichtung des Lichts von der Austrittsoberfläche einzustellen. Hierzu ist das an den Oberflächenelementen vorgesehene Beugungsgitter entsprechend der Fraunhoferschen Beugungsgesetze zu modifizieren. Die Einstellbarkeit liegt hierbei vorzugsweise im Bereich von 0 - 90° zur Austrittsoberfläche.

Ebenso ist es möglich, auf Grund der Wahl bzw. Ausgestaltung der Struktur der Oberflächenelemente die Farbtemperatur des abgestrahlten Lichts einzustellen. Vorzugsweise ist eine Einstellung der Farbtemperatur im Bereich von 3000 K - 10.000 K möglich.

Durch die erfindungsgemäße Ausgestaltung der Austrittsoberfläche mit diffraktiven Oberflächenelementen ist insbesondere eine spektrale Aufspaltung vermieden bzw. erheblich reduziert. Ferner ist eine ausreichende Lichtverstärkung bei gleichzeitig geringem Energieverbrauch gewährleistet. Des weiteren kann auf Grund des Vorsehens der diffraktiven Oberflächenelemente und insbesondere der Anordnung der Oberflächenelemente eine gute Kollimation des Lichts erreicht werden. Hierbei ist es besonders vorteilhaft, dass diese Vorteile ohne das Vorsehen weiterer Lichtlenksysteme, wie z. B. diffraktiv oder refraktiv arbeitender Folien, zur Lichtverstärkung oder Kollimation erzielt werden können.

Die erfindungsgemäßen diffraktiven Oberflächenelemente weisen vorzugsweise eine Größe von 0,04 µm² bis 10.000 µm², insbesondere 0,04 µm² bis 500 µm² auf. Bei einer insbesondere sinusförmigen Oberflächenstruktur der Oberflächenelemente weist diese vorzugsweise eine Amplitude von 550 nm auf. Beispielsweise sind sechs unterschiedlich ausgestaltete Oberflächenelemente vorgesehen, die vorzugsweise die selbst Amplitude von 550 nm aufweisen. Hierbei weisen die einzelnen Oberflächenelemente eine Frequenz von beispielsweise 490 nm, 503 nm, 517 nm, 530 nm, 575 nm und 620 nm auf. Insbesondere weist ein diffraktives Oberflächenelement eine Sinusschwingung auf. Der Abstand der einzelnen Oberflächenelemente untereinander liegt vorzugsweise im Bereich von 0 - 100 µm, insbesondere 0 - 50 µm und besonders bevorzugt 0 - 15 µm.

Bei einer besonders bevorzugten Ausgestaltung des Flachbildschirmes sind mehrere Oberflächenelemente mit unterschiedlicher Oberflächenstruktur zu einer Oberflächenelemente-Gruppe zusammengefasst. Hierbei sind die unterschiedlichen Oberflächenstrukturen derart gewählt, dass von einer Oberflächenelementen-Gruppe im Wesentlichen weißes Licht abgegeben wird. Die Art der Oberflächenstruktur, insbesondere die durch die Oberflächenstruktur hervorgerufene Wellenlängenänderung des Lichts, wird in Abhängigkeit der von der Punklichtquelle, wie der LED, abgegebenen Wellenlängenbereiche bestimmt, wobei vorzugsweise LEDs verwendet werden, die im Wesentlichen weißes Licht abstrahlen.

Vorzugsweise weist das Lichtlenkelement nur wenige unterschiedliche Oberflächenelementen-Gruppen auf. Besonders bevorzugt ist es, nur eine einzige Oberflächenelementen-Gruppe vorzusehen.

Vorzugsweise weist jede einzelne Oberflächenelementen-Gruppe mindestens zwei, vorzugsweise sechs oder acht Oberflächenelemente auf. Die einzelnen Oberflächenelemente sind vorzugsweise versetzt zueinander angeordnet. Insbesondere sind die einzelnen Oberflächenelemente in mehreren, vorzugsweise zwei Reihen auf Lücke angeordnet.

Hierbei sind beispielsweise sechs Oberflächenelemente zu einer Oberflächenelementen-Gruppe zusammengefasst, wobei die sechs Oberflächenelemente vorzugsweise die selbe Amplitude von beispielsweise 550 nm aufweisen. Die Frequenz der sechs Oberflächenelemente ist vorzugsweise unterschiedlich. Insbesondere weisen die einzelnen Oberflächenelemente eine Frequenz von 490 nm, 503 nm, 517 nm, 530 nm, 575 nm und 620 nm auf.

Bei einer besonders bevorzugten Ausführungsform der Erfindung ist je Punktlichtquelle, bzw. je LED, eine Zelle auf der Austritts- und/ oder Eintrittsoberfläche des Lichtlenkelementes vorgesehen. Jede Zelle weist eine Vielzahl von Oberflächenelementen und/ oder Oberflächenelementen-Gruppen auf. Die einzelnen Oberflächenelementen-Gruppen bzw. Oberflächenelemente sind hierbei derart angeordnet, dass das von jeder Punktlichtquelle abgegebene Licht in seiner Helligkeit und seiner Wellenlängenverteilung vergleichmäßigt wird. Hierzu ist die Dichte der Oberflächenelemente bzw. der Oberflächenelementen-Gruppen ausgehend von einem Punkt, insbesondere dem Zentrum der Zelle, nach außen steigend. Der Abstand der Oberflächenelemente bzw. der Oberflächenelementen-Gruppen nimmt somit mit wachsender Entfernung von dem Punkt bzw. dem Zentrum ab. Vorzugsweise ist die Punklichtquelle hinter dem Zentrum der Zelle angeordnet.

Besonders bevorzugt ist es, um eine weitere Vergleichmäßigung des aus dem Lichtlenkelement austretenden Lichts zu erzielen, die Zelle in dem Bereich, in dem die Punktlichtquelle angeordnet ist, insbesondere im Zentrum, derart auszubilden, dass sie eine geringere Transparenz aufweist. Vorzugsweise steigt die Transparenz ausgehend vom Zentrum der Zelle nach außen an. Vorzugsweise kann die Veränderung der Transparenz durch Auftragen eines Lackes in unterschiedlicher Dicke erfolgen. Hierbei ist es besonders bevorzugt, den Lack oder eine andere aushärtende Flüssigkeit auf einer Seite des Lichtlenkelementes und die einzelnen Oberflächenelemente auf der gegenüberliegenden Seite des Lichtlenkelementes vorzusehen.

Um eine möglichst gleichmäßige Verteilung der Helligkeit über die gesamte Bildschirmoberfläche und insbesondere auch in den Ecken des Bildschirmes erzielen zu können, sind die Abstände der einzelnen Oberflächenelemente bzw. der einzelnen Oberflächenelemente-Gruppen derart variiert, dass die Abstände in nach dem Stand der Technik dunkleren Bereichen geringer sind. Hierbei handelt es sich insbesondere um die Randbereiche und die Ecken.

Vorzugsweise weisen die einzelnen Punktlichtquellen bzw. LEDs einen Abstand von mindestens 5 mm, vorzugsweise mindestens 10 mm auf.

Eine zur Herstellung der diffraktiven Oberflächenelemente besonders gut geeignete Vorrichtung sowie ein entsprechendes Verfahren sind in EP 05 003 354 beschrieben.

Zur Herstellung der diffraktiven Oberflächenelemente ist insbesondere das folgende Material geeignet:

11 g 1H,1H,2H,2H-Perfluoroctylacrylat wurden mit 8 g Dipropylenglykoldiacrylat, 0,1 g Irgacure^{®} 819 und 0,2 g Irgacure^{®} 184 der Firma Ciba Spezialitätenchemie Lampersheim GmbH vermischt. 60 µl dieser Mischung wurde auf eine 2 x 2 cm große Nickelplatte aufgebracht, auf deren Oberfläche eine Negativform eines Formkörpers mit Streuzentren ausgebildet ist. Anschließend wurde ein 1 mm dickes und 1 x 1 cm großes Plättchen aus PMMA auf Oberfläche der Mischung auf der Nickelplatte aufgebracht. Daraufhin wurde der so erhaltene Sandwich auf der Nickelplatte mit dem dazwischen befindlichen Gemisch für 2 Sekunden UV-Strahlung einer handlesüblichen UV-Quecksilberlampe ausgesetzt. Anschließend wurde das Substrat mit der damit verbundenen gehärteten Abformzusammensetzung von der Negativ-Gussform entnommen.

Nachfolgend wird die Erfindung an Hand einer bevorzugten Ausführungsform unter Bezugnahme auf die anliegenden Zeichnungen näher erläutert.

Es zeigen:
- Fig. 1: ein Helligkeits-Diagramm eines mit LEDs beleuchteten LCD-Bildschirms nach dem Stand der Technik,
- Fig. 2: eine schematische perspektivische, vereinfachte Darstellung des prinzipiellen Aufbaus eines erfindungsgemäßen LCD-Bildschirmes,
- Fig. 3: eine schematische Draufsicht einer Zelle des Lichtleitelementes,
- Fig.4: ein Beispiel einer möglichen Anordnung von Oberflächenelementen in Oberflächenelementen-Gruppen und

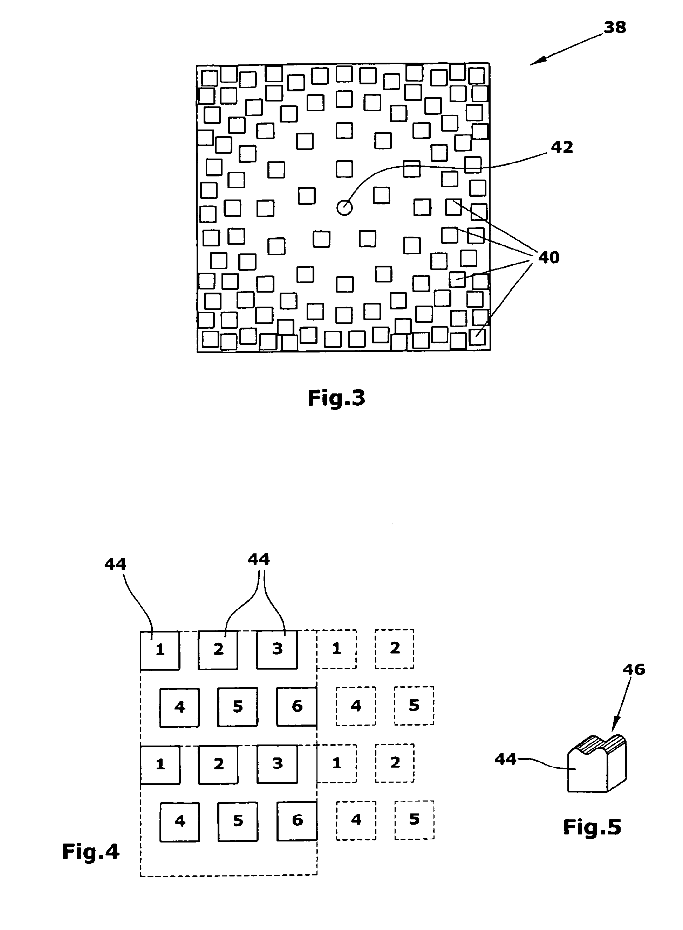

- Fig.4: ein Beispiel einer Oberflächenstruktur eines einzelnen Oberflächenelementes.

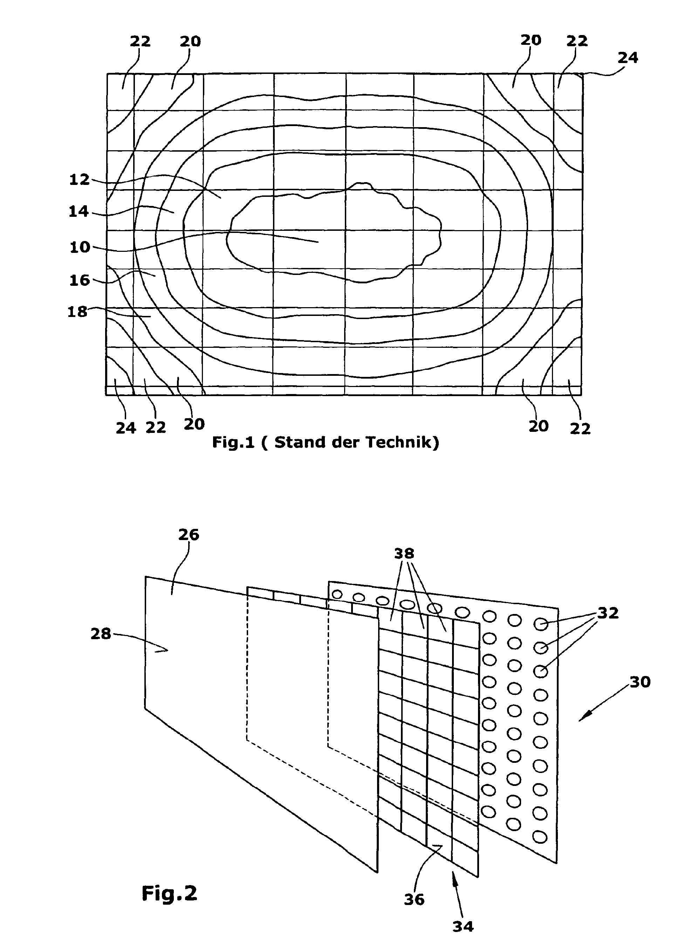

In dem in Fig. 1 dargestellten Diagramm ist schematisch eine Helligkeitsverteilung eines LCD-Bildschirms dargestellt. Es handelt sich hierbei um einen mit LEDs hinterleuchteten LCD-Bildschirm, wobei zur Vergleichmäßigung der Beleuchtung gemäß dem Stand der Technik zwischen den LEDs und dem LCD-Bildschirm eine BEF-Folie und eine DBEF-Folie vorgesehen ist. Hierbei ist in dem Diagramm in einem inneren Bereich 10 die Helligkeit am größten und nimmt im Wesentlichen konzentrisch nach außen in den Bereichen 12, 14, 16, 18 ab. Die dunkelsten Bereiche treten in den Ecken auf, wobei die Helligkeit von den Bereichen 20 über die Bereiche 22 zu den Bereichen 24 hin wiederum abnimmt.

Ein erfindungsgemäßer LCD-Flachbildschirm (Fig. 2) weist ein LCD-Element bzw. Flüssigkristall-Element 26 auf, auf dessen Vorderseite 28 die Bilddarstellung erfolgt. In einem Lichtkasten bzw. Leuchtelement 30 ist eine Vielzahl von Punktlichtquellen in Form von LEDs 32 angeordnet. Die LEDs 32 weisen im dargestellten Ausführungsbeispiel einen regelmäßigen Abstand von 10 mm auf.

Zwischen dem Leuchtelement 30 und dem LCD-Element 26 ist erfindungsgemäß ein Lichtlenkelement 34 aus einem transparenten Kunststoff oder einem Glas angeordnet. Auf einer Oberfläche 36 des Lichtlenkelementes 34 ist eine Vielzahl von Zellen 38 angeordnet. Jede der aneinandergrenzenden Zellen 38 weist eine Vielzahl einzelner Oberflächenelementen-Gruppen 40 (Fig. 3) auf. Vorzugsweise sind die einzelnen Oberflächenelementen-Gruppen konzentrisch zu einem Mittelpunkt 42 angeordnet, wobei hinter dem Mittelpunkt 42 die Punktlichtquelle 32 angeordnet ist. Wie aus Fig. 3 ersichtlich, nimmt der Abstand der einzelnen Oberflächenelementen-Gruppen 40 untereinander mit wachsendem Abstand zum Mittelpunkt 42 ab. Die Dichte an Oberflächenelementen-Gruppen 40 nimmt somit bezogen auf eine Zelle 38 von innen bzw. vom Mittelpunkt 42 ausgehend nach außen zu.

Vorzugsweise ist auf einer der Oberfläche 36 gegenüberliegenden Oberfläche des Lichtlenkelementes 34 ein Lack aufgebraucht, durch den eine Abdunklung des Mittelpunktes 42, auf dessen Höhe sich die LED 32 befindet, erfolgt. Hierbei ist der Lack vorzugsweise derart aufgebracht, dass die Transparenz des Lichtlenkelementes 34 je Zelle ausgehend von dem Mittelpunkt bzw. dem Zentrum 42 nach außen ansteigt.

Die einzelnen Oberflächenelementen-Gruppen 40weisen mehrere einzelne Oberflächenelemente 44 auf. Im dargestellten Ausführungsbeispiel weist jede einzelne Oberflächenelement-Gruppe 40 sechs Oberflächenelemente 42 auf, die in Fig. 4 mit 1- 6 bezeichnet sind.

Die einzelnen Oberflächenelemente 44 wirken als Beugungsgitter. Hierbei können unterschiedliche Oberflächenelemente 44 vorgesehen sein, die als lineare Beugungsgitter mit unterschiedlichen Gitterkonstanten ausgebildet sind. Die Oberfläche 46 (Fig. 5) einzelner Oberflächenelemente 44 ist beispielsweise als Phasen-Sinusgitter ausgebildet.

Die Herstellung der einzelnen Oberflächenelemente 44 und insbesondere der Oberflächenstruktur 46 der Oberflächenelemente 44 erfolgt erfindungsgemäß beispielsweise durch photo-lithographische Verfahren.

Besonders bevorzugt ist es, die Oberflächenelemente mit Hilfe eines aushärtendenden Lacks auf der Oberfläche des Lichtlenkelementes aufzubringen. Hierzu wird vorzugsweise mit Hilfe einer Abformeinrichtung, in die das Negativ des Beugungsgitters beispielsweise durch lithographische Verfahren eingebracht ist, verwendet. Mit Hilfe einer einzigen Abformeinrichtung können vorzugsweise mehrere diffraktive Oberflächenelemente abgeformt werden.

Zur Auskopplung von Licht mit unterschiedlicher Wellenlänge sind vorzugsweise unterschiedliche Oberflächenelemente 44, d. h. Oberflächenelemente 44 mit unterschiedlicher Oberflächenstruktur 46, angeordnet. Beispielsweise handelt es sich hierbei, wie in dem in Fig. 4 dargestellten Ausführungsbeispiel dargestellt, um sechs verschiedene Oberflächenelemente 44, die in Fig. 4 mit 1 bis 6 bezeichnet sind. Wie sich aus Fig. 4 ergibt, sind im dargestellten Ausführungsbeispiel die unterschiedlichen Oberflächenelemente 1 bis 6, die jeweils zur Auskopplung von Licht einer bestimmten Wellenlänge dienen, in einer sich wiederholenden Struktur angeordnet.

Die Oberflächenelemente 44 sind im dargestellten Ausführungsbeispiel quadratisch und haben eine Kantenlänge von ca. 15 µm.

## Patentansprüche

1. Flachbildschirm, mit
einem Flüssigkristall-Element (26) zur Bilddarstellung,
einem eine Vielzahl von Punktlichtquellen (32) aufweisenden Leuchtelement,
einem zwischen dem Leuchtelement (30) und dem Flüssigkristall-Element (26) angeordneten Lichtlenkelement (34), und
an einer Oberfläche (36) des Lichtlenkelementes (34) vorgesehenen, diffraktiven Oberflächenelementen (44) zur Vergleichmäßigung der Helligkeitsverteilung und/ oder zur Vergleichmäßigung der Wellenlängenverteilung,
wobei die Oberflächenelemente eine Größe von 0,04 - 10.000 µm² und untereinander einen Abstand von mehr als 0 - 100 µm aufweisen.

2. Flachbildschirm nach Anspruch 1, **dadurch gekennzeichnet, dass** die einzelnen Oberflächenelemente (44) als Beugungselemente wirken, die ein kollimiertes Lichtbündel mit spektraler Lichtaufspaltung erzeugen.

3. Flachbildschirm nach Anspruch 1 oder 2, **dadurch gekennzeichnet, dass** die Oberflächenelemente (44) derart angeordnet sind, dass durch Überlagerung von mindestens zwei benachbarten Lichtbündeln monochromatisches Licht und/ oder weißes Licht entsteht.

4. Flachbildschirm nach einem der Ansprüche 1- 3, **dadurch gekennzeichnet, dass** die Oberflächenelemente (40) eine Größe von 0,04 - 500 µm² aufweisen.

5. Flachbildschirm nach einem der Ansprüche 1-4, **dadurch gekennzeichnet, dass** die einzelnen Oberflächenelemente (44) untereinander einen Abstand von mehr als 0 - 50 µm und insbesondere mehr als 0 - 15 µm aufweisen.

6. Flachbildschirm nach einem der Ansprüche 1-5, **dadurch gekennzeichnet, dass** mehrere Oberflächenelemente (44) mit unterschiedlicher Oberflächenstruktur (46) zur Erzeugung von im Wesentlichen weißem Licht zu einer Oberflächenelementen-Gruppe (40) zusammengefasst sind.

7. Flachbildschirm nach einem der Ansprüche 1-6, **dadurch gekennzeichnet, dass** die Lage der Oberflächenelemente (44) bzw. der Oberflächenelementen-Gruppe (40) an die Lage der Punktlichtquellen (32) angepasst ist.

8. Flachbildschirm nach einem der Ansprüche 1 - 7, **dadurch gekennzeichnet, dass** die Anzahl der Oberflächenelemente (44) bzw. der Oberflächenelementen-Gruppen (40) und/ oder die Anzahl der Punktlichtquellen (32) im Randbereich, insbesondere in den Ecken, erhöht ist.

9. Flachbildschirm nach einem der Ansprüche 1-8, **dadurch gekennzeichnet, dass** an einer Oberseite (36) des Lichtlenkelementes (34) Zellen (38) mit einer Vielzahl von Oberflächenelementen (44) bzw. Oberflächenelementen-Gruppen (40) angeordnet sind, wobei jeder Punktlichtquelle (32) eine Zelle (38) zugeordnet ist.

10. Flachbildschirm nach Anspruch 9, **dadurch gekennzeichnet, dass** die Punktlichtquellen (32) jeweils zentrisch zu einer Zelle (38) angeordnet sind.

11. Flachbildschirm nach Anspruch 9 oder 10, **dadurch gekennzeichnet, dass** der Abstand der Oberflächenelemente (44) bzw. der Oberflächenelementen-Gruppen (40) von einem Zellenmittelpunkt (42) aus nach außen abnimmt.

12. Flachbildschirm nach einem der Ansprüche 9 - 11, **dadurch gekennzeichnet, dass** das Lichtlenkelement in einzelnen Punktlichtquellen (32) gegenüberliegende Bereiche mit geringerer Transparenz aufweist.

13. Flachbildschirm nach Anspruch 12, **dadurch gekennzeichnet, dass** die Transparenz des Lichtlenkelementes je Zelle ausgehend von einem Mittelpunkt (42) nach außen zunimmt.

14. Flachbildschirm nach einem der Ansprüche 1 - 9, **dadurch gekennzeichnet, dass** die Punktlichtquellen (32) einen Abstand von mindestens 5 mm, vorzugsweise mindestens 10 mm aufweisen.

15. Flachbildschirm nach einem der Ansprüche 1- 14, **dadurch gekennzeichnet, dass** die Punklichtquellen LEDs sind, die im Wesentlichen weißes Licht abgeben.

## Claims

1. A flat screen comprising:
a liquid-crystal element (26) for image representation,
an illuminating element comprising a plurality of point light sources (32),
a light-guiding element (34) arranged between the illuminating element (30) and the liquid-crystal element (26), and
diffractive surface elements (44) at a surface (36) of the light-guiding element (34) for rendering the brightness distribution and/or the wavelength distribution more uniform,
wherein the surface elements have a size of 0.04-10,000 µm², and are arranged at a distance to each other of more than 0-100 µm.

2. The flat screen according to claim 1, **characterized in that** the individual surface elements (44) act as diffraction gratings which produce a collimated light bundle with spectral light splitting.

3. The flat screen according to claim 1 or 2, **characterized in that** the surface elements (44) are arranged such that by superposition of at least two adjacent light bundles monochromatic light and/or white light is produced.

4. The flat screen according to one of claims 1-3, **characterized in that** the surface elements (44) have a size of 0.04-500 µm².

5. The flat screen according to any one of claims 1-4, **characterized in that** the individual surface elements (44) are arranged at a distance to each other of more than 0-50 µm, and in particular more than 0-15 µm.

6. The flat screen according to any one of claims 1-5, **characterized in that** a plurality of surface elements (44) with different surface structures (46) are combined to form a surface element group (40) for the purpose of producing essentially white light.

7. The flat screen according to any one of claims 1-6, **characterized in that** the location of the surface elements (44) and/or the surface element group (40) is matched to the location of the point light sources (32).

8. The flat screen according to any one of claims 1-7, **characterized in that** the number of surface elements (44) and/or surface element groups (40) and/or the number of point light sources (32) is increased in the edge region, in particular in the corners.

9. The flat screen according to any one of claims 1-8, **characterized in that** on a top side (36) of the light-guiding element (34) cells (38) comprising a plurality of surface elements (44) and/or surface element groups (40) are arranged, wherein one cell (38) is associated with each point light source (32).

10. The flat screen according to claim 9, **characterized in that** point light sources (32) are arranged centrically with respect to a respective cell (38).

11. The flat screen according to claim 9 or 10, **characterized in that** the distance between the surface elements (44) and/or the surface element groups (40) decreases from a cell center (42) in outward direction.

12. The flat screen according to any one of claims 9-11, **characterized in that** the light-guiding element comprises opposite regions of lower transparency in individual point light sources (32).

13. The flat screen according to claim 12, **characterized in that** the transparency of each cell of the light-guiding element increases from a center (42) in outward direction.

14. The flat screen according to any one of claims 1-9, **characterized in that** the point light sources (32) are arranged at a distance to each other of at least 5 mm, and preferably at least 10 mm.

15. The flat screen according to any one of claims 1-14, **characterized in that** the point light sources are LEDs which essentially emit white light.

## Revendications

1. Ecran plat, comportant
un élément à cristaux liquides (26) pour l'affichage de l'image,
un élément luminescent comprenant une multiplicité de sources ponctuelles de lumière (32),
un élément de déviation de lumière (34) disposé entre l'élément luminescent (30) et l'élément à cristaux liquides (26), et
des éléments superficiels (44) à effet diffractant, prévus sur une surface libre (36) de l'élément de déviation de lumière (34), pour l'homogénéisation du réglage de luminosité et/ou pour l'homogénéisation de la répartition en longueurs d'ondes,
les éléments superficiels présentant une grandeur de 0,04-10 000 µm² et, entre eux, un écartement de plus de 0-100 µm.

2. Ecran plat selon la revendication 1, **caractérisé en ce que** les éléments superficiels (44) individuels agissent comme des éléments de diffraction, qui produisent un faisceau lumineux collimaté avec décomposition spectrale de la lumière.

3. Ecran plat selon la revendication 1 ou 2, **caractérisé en ce que** les éléments superficiels (44) sont disposés de telle manière que par superposition d'au moins deux faisceaux lumineux adjacents, une lumière monochromatique et/ou de la lumière blanche soit engendrée.

4. Ecran plat selon l'une des revendications 1 à 3, **caractérisé en ce que** les éléments superficiels (44) présentent une grandeur de 0,04-500 µm².

5. Ecran plat selon l'une des revendications 1 à 4, **caractérisé en ce que** les éléments superficiels (44) individuels présentent entre eux un écartement de plus de 0-50 µm et, plus particulièrement de plus de 0-15 µm.

6. Ecran plat selon l'une des revendications 1 à 5, **caractérisé en ce que** plusieurs éléments superficiels (44) de structures de surface (46) différentes sont rassemblés en un groupe d'éléments superficiels (40), pour produire de la lumière sensiblement blanche.

7. Ecran plat selon l'une des revendications 1 à 6, **caractérisé en ce que** le positionnement des éléments superficiels (44) ou du groupe d'éléments superficiels (40) est adapté au positionnement des sources ponctuelles de lumière (32).

8. Ecran plat selon l'une des revendications 1 à 7, **caractérisé en ce que** le nombre des éléments superficiels (44) ou des groupes d'éléments superficiels (40) et/ou le nombre des sources ponctuelles de lumière (32) est augmenté dans la zone de bord, en particulier dans les angles.

9. Ecran plat selon l'une des revendications 1 à 8, **caractérisé en ce que** sur une face supérieure (36) de l'élément de déviation de lumière (34) sont disposées des cellules (38) comportant une multiplicité d'éléments superficiels (44) ou de groupes d'éléments superficiels (40), une cellule (38) étant associée à chaque source ponctuelle de lumière (32).

10. Ecran plat selon la revendication 9, **caractérisé en ce que** les sources ponctuelles de lumière (32) sont chacune dans une disposition centrée par rapport à une cellule respective (38).

11. Ecran plat selon la revendication 9 ou 10, **caractérisé en ce que** l'écartement des éléments superficiels (44) ou des groupes d'éléments superficiels (40) diminue, depuis un centre (42) de la cellule, en direction de l'extérieur.

12. Ecran plat selon l'une des revendications 9 à 11, **caractérisé en ce que** l'élément de déviation de lumière présente, dans des sources ponctuelles de lumière (32) individuelles, des zones opposées l'une à l'autre de transparence réduite.

13. Ecran plat selon la revendication 12, **caractérisé en ce que** la transparence de l'élément de déviation de lumière, pour chaque cellule, croît à partir d'un centre (42), en direction de l'extérieur.

14. Ecran plat selon l'une des revendications 1 à 9, **caractérisé en ce que** les sources ponctuelles de lumière (32) présentent un écartement d'au moins 5 mm, de préférence d'au moins 10 mm.

15. Ecran plat selon l'une des revendications 1 à 14, **caractérisé en ce que** les sources ponctuelles de lumière sont des diodes électroluminescentes, qui émettent de la lumière sensiblement blanche.
